(19) Europäisches Patentamt
European Patent Office
Office européen des brevets

(11) **EP 2 305 423 B1**

## (12) FASCICULE DE BREVET EUROPEEN

(45) Date de publication et mention
de la délivrance du brevet:
**15.02.2012 Bulletin 2012/07**

(51) Int Cl.:
***B24B 9/14*** *(2006.01)*     ***G02C 13/00*** *(2006.01)*

(21) Numéro de dépôt: **10290466.1**

(22) Date de dépôt: **01.09.2010**

(54) **Procédé d'élaboration d'une consigne de détourage d'une lentille ophtalmique**

Verfahren zur Verarbeitung eines Sollwerts zum Konturfräsen einer Sehlinse

Method for creating a setting for trimming an ophthalmic lens

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **14.09.2009 FR 0904384**

(43) Date de publication de la demande:
**06.04.2011 Bulletin 2011/14**

(73) Titulaire: **Essilor International
(Compagnie Générale d'Optique)
94220 Charenton-le-Pont (FR)**

(72) Inventeurs:
• **Biton, Jérémie
94220 Charenton Le Pont (FR)**

• **Dubois, Frédéric
94220 Charenton Le Pont (FR)**
• **Freson, David
94220 Charenton Le Pont (FR)**

(74) Mandataire: **Chauvin, Vincent et al
Coralis
14 rue Ballu
75009 Paris (FR)**

(56) Documents cités:
**EP-A1- 1 642 678     EP-A1- 2 028 532
EP-A2- 1 591 199**

**Description**

DOMAINE TECHNIQUE AUQUEL SE RAPPORTE L'INVENTION

La présente invention concerne de manière générale la préparation de lentilles ophtalmiques en vue de leur emboîtement dans des entourages de montures de lunettes cerclées ou semi-cerclées.

ARRIÈRE-PLAN TECHNOLOGIQUE

La partie technique du métier de l'opticien consiste à monter une paire de lentilles ophtalmiques sur une monture de lunettes sélectionnée par un porteur.

Ce montage se décompose en trois opérations principales :

- l'acquisition des contours des entourages de la monture de lunettes sélectionnée,
- le centrage des lentilles qui consiste à reporter les deux contours acquis sur les deux lentilles ophtalmiques, de telle manière qu'une fois montée sur la monture de lunettes, chaque lentille se trouve convenablement centrée en regard de la pupille de l'oeil correspondant du porteur, puis
- l'usinage des lentilles qui consiste à les découper selon ces contours.

Dans le cadre de la présente invention, on s'intéresse plus particulièrement aux montures de lunettes à entourages, c'est-à-dire aux montures de lunettes cerclées et semi-cerclées (« à arcades »).

Pour ces montures, l'objectif concret de l'opticien est de découper les lentilles ophtalmiques de manière à ce qu'elles puissent mécaniquement et esthétiquement s'adapter aux formes des entourages, tout en s'assurant que ces lentilles exercent au mieux les fonctions optiques pour lesquelles elles ont été conçues.

L'opération d'usinage comprend en particulier, dans le cas des montures cerclées, une étape de biseautage permettant de former sur la tranche de la lentille une nervure d'emboîtement (communément appelée biseau) apte à s'emboîter dans une rainure (communément appelée drageoir) qui court le long de la face intérieure de l'entourage correspondant de la monture.

L'opération d'usinage comporte en revanche, dans le cas des montures semi-cerclées, une étape de rainage permettant de former sur la tranche de la lentille une rainure d'emboîtement. Lors du montage de la lentille dans l'entourage, cette rainure d'emboîtement s'engage sur une nervure qui court le long de la face intérieure du demi-cercle (ou « arcade ») correspondant de la monture. La lentille ophtalmique est alors maintenue en appui contre cette arcade à l'aide d'un fil, généralement en nylon (éventuellement en métal), qui s'engage dans la rainure d'emboîtement et dont les extrémités se raccordent aux extrémités de l'arcade.

Quel que soit le type de la monture de lunettes sélectionnée, les opérations d'acquisition et d'usinage doivent être réalisées avec soin de manière que la lentille puisse parfaitement s'emboîter dans son entourage, sans effort et « du premier coup », c'est-à-dire sans nécessiter de reprise d'usinage ou de mise à longueur du fil nylon.

Pour acquérir la forme de l'entourage, on utilise généralement un appareil de lecture de contours comportant un palpeur qui vient glisser directement sur l'entourage ou sur une lentille de présentation caractéristique de la forme de cet entourage.

On constate toutefois, à l'issue de ce palpage, des erreurs de relèvement inhérentes au fonctionnement de l'appareil de lecture. On constate aussi, à l'issue de l'opération d'usinage, des erreurs d'usinage également inhérentes au fonctionnement de l'appareil de détourage.

En réduisant ces erreurs, la demanderesse a observé que certaines lentilles ophtalmiques demeurent difficilement montables dans leurs entourages. Il est alors nécessaire, pour écarter tout risque de déboîtement de la lentille hors de son entourage, de reprendre l'usinage de la lentille et/ou de modifier la longueur du fil nylon, ce qui s'avère fastidieux à réaliser.

A titre de comparaison, le document EP-A-1642678 divulgue un procédé de l'art antérieur pour l'élaboration d'une consigne de détourage d'une lentille ophtalmique en vue de son montage dans un entourage d'une monture de lunette.

OBJET DE L'INVENTION

Afin de remédier à cet inconvénient, la présente invention propose un procédé d'élaboration d'une consigne de détourage d'une lentille ophtalmique, permettant de prévenir d'éventuelles difficultés de montage des lentilles ophtalmiques dans leurs entourages.

Plus particulièrement, on propose selon l'invention un procédé d'élaboration d'une consigne de détourage d'une lentille ophtalmique en vue de son montage dans un entourage d'une monture de lunettes, comportant les étapes consistant à :

a) dans un référentiel de l'entourage repéré par un axe horizontal, acquérir la forme d'un profil longitudinal dudit entourage et la longueur périmétrique de ce profil longitudinal ;

b) dans un référentiel optique de la lentille ophtalmique qui est repéré par un point de centrage et par un axe horizontal et qui est mis en coïncidence avec le référentiel de l'entourage, centrer et orienter ledit profil longitudinal,

c) projeter ledit profil longitudinal acquis sur une surface courbée déduite d'un paramètre de courbure de ladite lentille ophtalmique ou d'un paramètre de courbure de ladite monture de lunettes,

d) corriger la forme dudit profil longitudinal projeté de manière à égaliser sa longueur périmétrique avec la longueur périmétrique du profil longitudinal acquis,

e) déduire dudit profil longitudinal corrigé ladite consigne de détourage.

Plus particulièrement selon l'invention, à l'étape d), la correction est réalisée en deux opérations consistant à :

- étirer, selon une fonction mathématique donnée, le profil longitudinal projeté suivant un axe d'ordonnée transversal auxdits axes horizontaux, et à

- comprimer le profil longitudinal étiré suivant un axe orthogonal audit axe d'ordonnée.

Par « transversal », on entend que l'axe d'ordonnée est oblique ou perpendiculaire par rapport à l'axe horizontal.

La demanderesse a observé qu'une partie des difficultés de montage provenaient de la forme des entourages des montures de lunette sélectionnées. Elle a en particulier observé que les montures de lunettes fortement galbées (ou « cambrées ») et allongées provoquaient souvent de telles difficultés.

Ces difficultés s'expliquent ainsi.

Sur les montures de lunettes cerclées et semi-cerclées, plus l'entourage est allongé, plus la pression sur les parties nasale et temporale de l'entourage est importante. Cette pression importante explique que le montage soit difficile.

Par ailleurs, plus la pression sur les parties nasale et temporale de l'entourage est importante, plus elle est réduite sur les parties basse et haute de l'entourage. Cette pression réduite explique les risques de déboîtement de la lentille hors de l'entourage.

Sur les montures de lunettes cerclées, cette différence de pressions génère des difficultés encore plus importantes. Un cercle de monture de lunettes est en effet généralement vrillé, si bien que les sections transversales du cercle présentent des inclinaisons variables, maximales du côté de ses zones temporale et nasale. Le biseau de la lentille présente au contraire une inclinaison uniforme le long du contour de la lentille. La différence d'inclinaison entre le biseau de la lentille et le drageoir du cercle au niveau des zones nasale et temporale génère alors une instabilité au montage de la lentille dans le cercle, qui s'ajoute au problème de surpression précité, ce qui augmente les risques de déboîtement du biseau hors du drageoir.

Grâce à l'invention, la lentille est usinée suivant un profil longitudinal étiré suivant l'axe d'ordonnée (qui est préférentiellement vertical dans les condition du porté de la monture par le porteur), ce qui permet d'augmenter la pression de la lentille sur les zones haute et basse de l'entourage.

Ce profil longitudinal est par ailleurs comprimé suivant un axe orthogonal à l'axe d'ordonnée (en pratique, l'axe horizontal) pour égaliser la circonférence de la lentille avec celle de l'entourage, ce qui permet de réduire la pression de la lentille sur les zones nasale et temporale de l'entourage.

De cette manière, le procédé selon l'invention assure un montage « du premier coup », qui permet d'éviter toute reprise d'usinage ou toute mise à longueur du fil nylon.

Lors de l'étape c), il s'agit de projeter le profil longitudinal sur une surface approchant la forme de l'une des faces de la lentille ophtalmique de manière à acquérir les coordonnées tridimensionnelles d'un profil longitudinal s'étendant sur la lentille. Du fait de cette projection, le profil projeté présente une longueur périphérique différente de celle du profil acquis. Lors de l'étape d), il s'agit alors de corriger ce profil projeté en s'assurant que le profil corrigé présente une longueur périphérique identique à celle du profil acquis (c'est-à-dire égale à celle de l'entourage).

Dans un mode principal de réalisation de l'invention, les étapes a) à e) sont successivement réalisées les unes à la suite des autres, et la surface courbée sur laquelle est projetée le profil longitudinal acquis est déduite d'un paramètre de courbure de la lentille ophtalmique.

En d'autres termes, les étapes c) et d) sont réalisées après le centrage de la lentille ophtalmique par un dispositif centreur-bloqueur. Ces étapes peuvent alors être mises en oeuvre soit par ce dispositif centreur-bloqueur, soit par un dispositif d'usinage adapté à détourer la lentille ophtalmique. Par conséquent, lorsque ces étapes sont mises en oeuvre, la géométrie de la lentille ophtalmique est déjà connue, si bien qu'à l'étape c), il est possible de projeter le profil longitudinal acquis sur une surface déduite de la forme de la lentille ophtalmique.

Dans un autre mode de réalisation, les étapes c) et d) sont réalisées avant l'étape b), et la surface courbée sur laquelle est projetée le profil longitudinal acquis est déduite d'un paramètre de courbure de la monture de lunettes.

En d'autres termes, les étapes c) et d) sont réalisées avant même que la lentille n'ait été centrée. Elles sont donc préférentiellement mises en oeuvre par le dispositif qui a permis d'acquérir le profil longitudinal de l'entourage de la monture de lunettes. Par conséquent, lorsque ces étapes c) et d) sont mises en oeuvre, la géométrie de la lentille ophtalmique n'est pas encore connue, si bien qu'à l'étape c), il est seulement possible de projeter le profil longitudinal acquis sur une surface considérée comme approchant la forme de l'une des faces de la lentille ophtalmique. Cette surface approchante est alors calculée en fonction de la seule forme connue à ce stade, qui est la forme de la monture de lunettes.

Le paramètre de courbure de la monture de lunettes permettant de caractériser cette surface approchante peut alors revêtir deux réalités.

Ce paramètre peut être un paramètre de courbure de l'entourage de la monture de lunettes destiné à accueillir la lentille ophtalmique à détourer. Les courbures de lentilles sont en effet généralement choisies en fonction des courbures des entourages de montures de lunettes destinées à les accueillir, de manière à s'assurer que les lentilles puissent s'emboîter dans leurs entourages. La courbure de l'entourage permet ainsi d'obtenir une approximation de la courbure de la lentille ophtalmique à détourer.

Ce paramètre peut également être un paramètre de courbure globale de la monture de lunettes tel que l'angle d'inclinaison entre les plans moyens des deux entourages. En effet, comme on le sait, cet angle d'inclinaison est généralement lié à la courbure d'un entourage. Cet angle d'inclinaison permet ainsi d'obtenir une approximation de la courbure de la lentille ophtalmique à détourer.

Préférentiellement, à l'étape d), les deux opérations de correction de la forme du profil longitudinal projeté sont réalisées simultanément.

En variante, elles peuvent être réalisées successivement l'une à la suite de l'autre.

Dans cette variante, le profil longitudinal est tout d'abord étiré suivant un axe préférentiel (l'axe d'ordonnée), puis comprimé suivant un second axe, orthogonal à l'axe préférentiel. Lors de l'opération de compression, le profil longitudinal peut également être comprimé suivant l'axe préférentiel, pour autant toutefois que le profil longitudinal comprimé reste plus allongé que le profil longitudinal projeté suivant l'axe préférentiel.

On pourra également prévoir de commencer par comprimer le profil longitudinal projeté suivant le second axe, avant de l'étirer suivant l'axe préférentiel.

D'autres caractéristiques avantageuses et non limitatives de l'invention sont les suivantes :

- ledit référentiel optique étant également repéré par un axe, appelé axe normal, qui est perpendiculaire au plan tangent de la lentille ophtalmique au point de centrage, ledit axe d'ordonnée est orthogonal auxdits axes horizontal et normal ;
- ladite fonction mathématique est indépendante de la différence entre lesdites longueurs périmétriques ;
- la fonction mathématique est une dilatation autour de l'axe horizontal, de rapport appelé coefficient d'étirement ;

- la fonction mathématique présente un coefficient d'étirement prédéterminé ;
- la fonction mathématique présente un coefficient d'étirement déterminé en fonction de la forme de la lentille ophtalmique et/ou de la forme de la monture de lunettes et/ou du matériau de la monture de lunettes ;
- la fonction mathématique présente un coefficient d'étirement variable en fonction de la position suivant l'axe horizontal du point considéré sur le profil longitudinal projeté ;
- le coefficient d'étirement est déterminé en fonction d'une caractéristique de cambrure de l'entourage ;
- si ladite caractéristique de cambrure est inférieure à un seuil prédéterminé, le coefficient d'étirement est égal à 1 en tout point du profil longitudinal projeté et ladite fonction mathématique est la fonction identité, sinon, le coefficient d'étirement est strictement supérieur à 1 en au moins une partie du profil longitudinal projeté ;
- ladite surface courbée est la face avant ou arrière de la lentille ophtalmique ;
- ladite surface courbée est une surface située entre les faces avant et arrière de la lentille ophtalmique ;
- la projection est une projection orthogonale suivant un axe normal à l'axe horizontal ;
- à l'étape a), on acquiert les coordonnées spatiales d'une pluralité de points caractérisant la forme dudit profil longitudinal, et on calcule la longueur périmétrique dudit profil longitudinal à partir de ces coordonnées spatiales.

DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 est une vue schématique en perspective d'une monture de lunettes cerclée ;
- la figure 2 est une vue schématique en perspective d'une monture de lunettes semi-cerclée ;

- la figure 3 est une vue schématique en perspective d'une lentille ophtalmique non détourée ;
- la figure 4 est une vue schématique en perspective d'un appareil de

lecture de contours ;

- la figure 5 est une vue en perspective d'un profil longitudinal bidimensionnel représentatif de la forme de l'un des entourages de la monture de lunettes de la figure 2, et de sa projection tridimensionnelle sur une face d'une lentille de présentation de cette monture de lunettes ;
- la figure 6 est une vue de face de la lentille ophtalmique de la figue 3, sur laquelle est superposé le profil longitudinal bidimensionnel de la figure 5 ;
- la figure 7 est une vue en perspective du profil longitudinal bidimensionnel de la figure 5, de sa projection sur une face de la lentille ophtalmique de la figure 3, et d'une déformée de cette projection en vue du calcul d'une consigne de détourage de la lentille ophtalmique ;

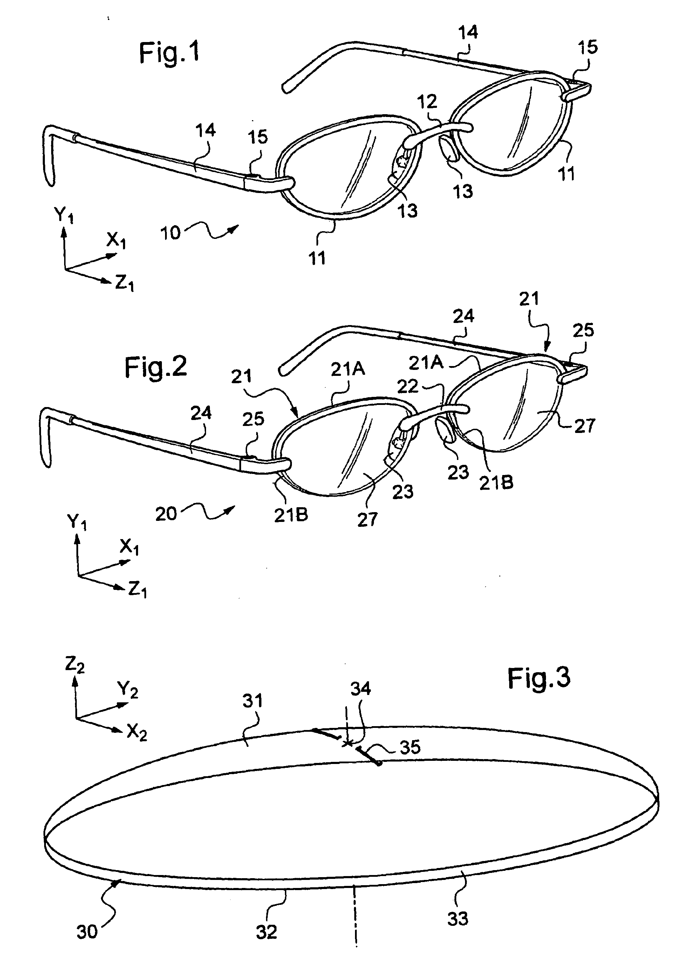

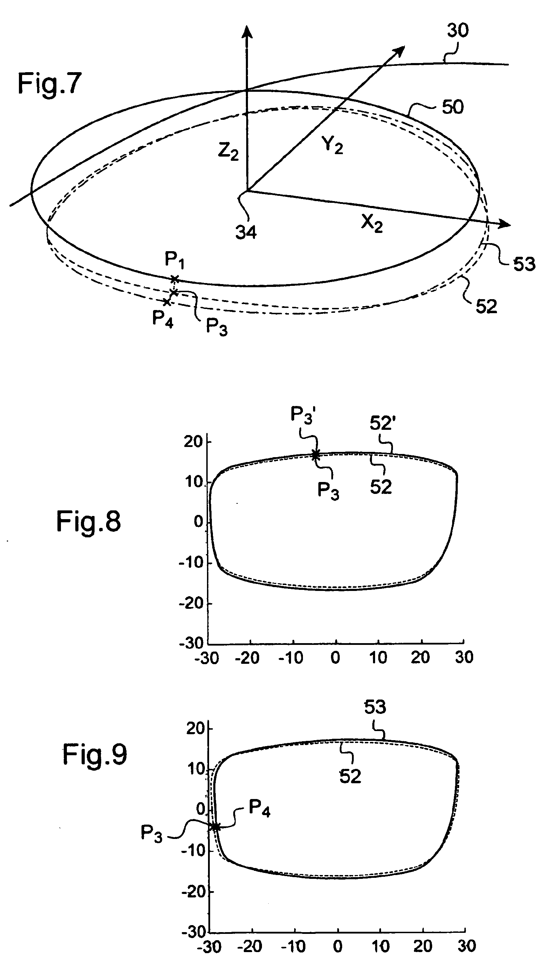

- les figures 3 et 9 sont des vues illustrant deux étapes de déformation du profil longitudinal projeté de la figure 7 ; et

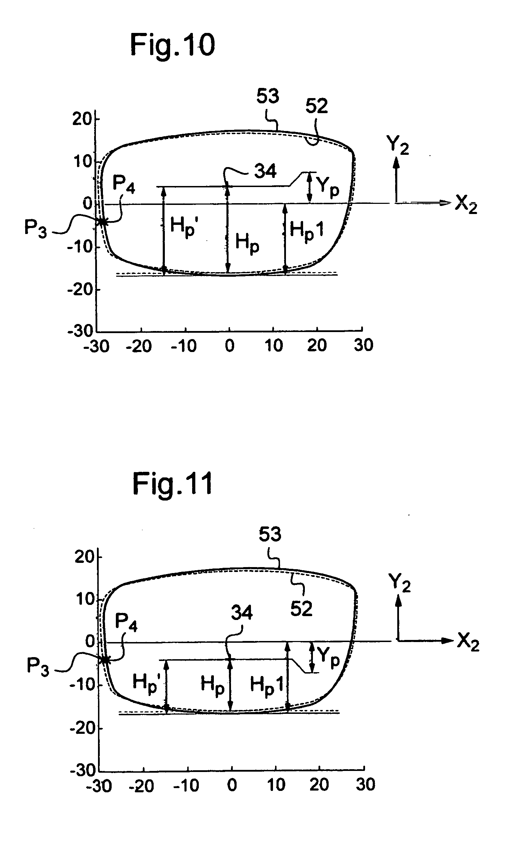

- les figures 10 et 11 sont des vues de face du profil longitudinal projeté sur la lentille et du profil longitudinal déformé de la figure 7, dans lesquelles le point de centrage est respectivement situé au-dessus et en dessous de la ligne d'ordonnée nulle dans le référentiel optique de la lentille.

## Monture de lunettes

Sur les figures 1 et 2 on a représenté deux montures de lunettes 10, 20 respectivement cerclée et semi-cerclée, comportant chacune deux entourages 11, 21.

Plus particulièrement, sur la figure 1, la monture de lunettes 10 cerclée comporte deux cercles 11 destinés chacun à accueillir une lentille ophtalmique et à être positionnés en regard de l'un des deux yeux du porteur lorsque ce dernier porte ladite monture.

Les deux cercles 11 sont reliés l'un à l'autre par un pont ou pontet 12. Ils sont en outre chacun équipés d'une plaquette nasale 13 apte à reposer sur le nez du porteur et d'une branche 14 apte à reposer sur l'une des oreilles du porteur. Chaque branche 14 est articulée sur le cercle correspondant au moyen d'un barillet 15.

Les deux cercles 11 de la monture de lunettes 10 présentant un bord intérieur dans lequel est ménagée une rainure d'emboîtement, communément appelée drageoir, de section généralement en forme de dièdre.

Les deux cercles 11 présentent une cambrure non nulle. Cette cambrure peut être caractérisée par un rayon de courbure moyen correspondant au rayon de courbure d'une sphère passant par quatre points du drageoir situés à égale distance deux à deux.

Sur la figure 2, les entourages 21 de la monture de lunettes 20 semi-cerclée comportent chacun une arcade 21A (ou « demi-cercle ») et un fil nylon 21 B, dont les deux bouts sont raccordés aux extrémités de cette arcade 21A. Ces arcades 21A et fils nylon 21 B permettent conjointement de maintenir deux lentilles sur la monture de lunettes 20.

Les deux arcades 21A sont reliées l'une à l'autre par un pontet 22. Chaque arcade 21A est équipée d'une plaquette nasale 23 apte à reposer sur le nez du porteur et d'une branche 24 apte à reposer sur l'une des oreilles du porteur. Chaque branche 24 est articulée sur l'arcade 21A correspondante au moyen d'un barillet 25.

Les deux arcades 21A de la monture de lunettes 20 présentent un bord intérieur sur lequel court une nervure d'emboîtement.

Tel que cela apparaît sur la figure 2, la monture de lunettes 20 porte deux lentilles de présentation 27 livrées à l'opticien avec la monture. Ces deux lentilles de présentation 27 seront utilisées comme gabarit de forme pour détourer les lentilles ophtalmiques à monter sur la monture de lunettes 20.

Les deux entourages 21 présentent une cambrure non nulle. Cette cambrure peut être caractérisée par le rayon de courbure de la face avant sphérique de la lentille de présentation 27.

## Lentille ophtalmique

Comme le montre la figure 3, la lentille ophtalmique 30 présente deux faces optiques avant 31 et arrière 32, et une tranche 33.

La face optique avant 31 est ici sphérique et présente un rayon de courbure connu.

La tranche 33 de la lentille présente un contour initial circulaire. La lentille est toutefois destinée à être détourée à la forme de l'entourage 11, 21 correspondant de la monture de lunettes 10, 20, de manière à pouvoir être emboîtée dans celui-ci.

Dans le cas où la monture sélectionnée est cerclée (figure 1), la lentille ophtalmique 30 est plus précisément destinée à être détourée pour présenter sur sa tranche 33 une nervure d'emboîtement (ou biseau) apte à s'emboîter dans le drageoir du cercle 11 correspondant de la monture de lunettes 10.

Dans le cas où la monture sélectionnée est semi-cerclée (figure 2), la lentille ophtalmique 30 est au contraire destinée à être détourée pour présenter sur sa tranche 33 une rainure d'emboîtement qui est apte à être engagée sur la nervure d'emboîtement de l'arcade 21A correspondante de la monture de lunettes et qui est apte à accueillir le fil nylon 21 B.

Cette lentille ophtalmique 30 présente des caractéristiques optiques déterminées en fonction des besoins du porteur de lunettes. Elle présente en particulier des propriétés de réfringence sphérique, cylindrique et prismatique qui sont propres au porteur.

Cette lentille ophtalmique 30 est en outre pourvue de marquages 34, 35 qui permettent un repérage commode du référentiel optique de la lentille ophtalmique 30 pour son montage sur la monture de lunettes 10, 20 sélectionnée par le porteur. Ces marquages consistent ici en des marquages provisoires 34, 35 à l'encre. Ils pourraient en variante consister en des marquages permanents, tels que des micro-gravures.

Ici, ces marquages comportent une croix de centrage 34 permettant de repérer la position du point de centrage de !a lentille c'est-à-dire, dans !e cas d'une lentille ayant une puissance optique exclusivement sphérique, le point où le rayon incident et le rayon transmis ont même axe.

Il comporte en outre, de part et d'autre de cette croix de centrage 34, deux traits d'horizon 35 repérant l'horizontale de la lentille ophtalmique 30.

On caractérise alors le référentiel optique de la lentille ophtalmique 30 par une repère orthonormé comportant un axe horizontal $X_2$ parallèle auxdits traits d'horizon 35, un axe d'ordonnée $Y_2$, et un axe normal $Z_2$ qui est perpendiculaire au plan tangent à la face avant de la lentille ophtalmique 30 au point de centrage 34.

Terminaux client et fabricant

L'invention présente une avantage particulier lorsque la préparation des lentilles est confiée à des fabricants de lentilles distincts des opticiens, c'est-à-dire lorsque les opticiens agissent en « donneurs d'ordre » qui sous-traitent la fabrication et le détourage des lentilles à de tels fabricants.

Pour illustrer cette configuration, on considérera ici, d'une part, un terminal-client installé du côté d'un opticien pour la commande de lentilles, et, d'autre part, un terminal-fabricant installé du côté d'un fabricant de lentilles pour la fabrication et le détourage de lentilles.

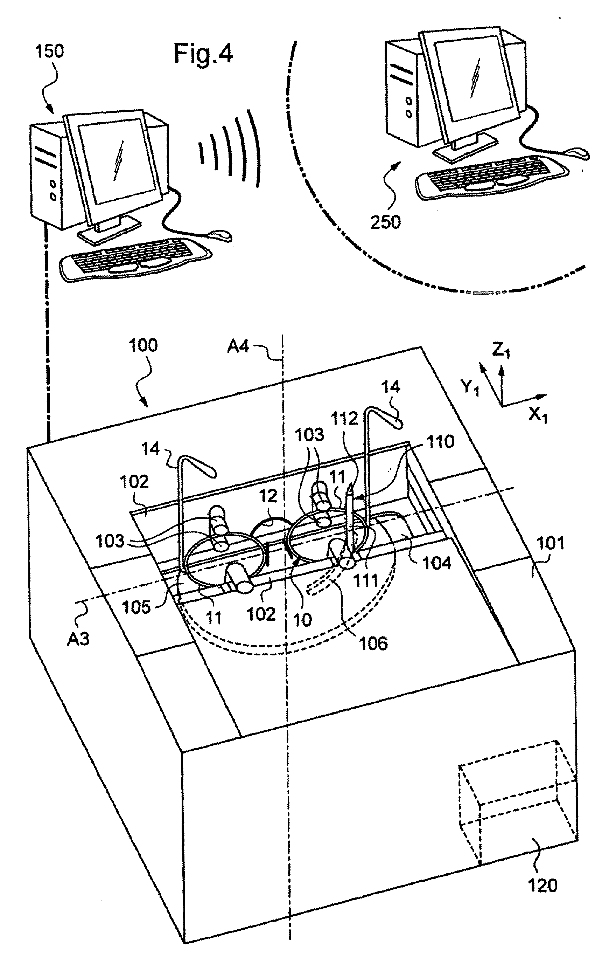

Le terminal-client comporte une unité informatique 150 (figure 4), ici un ordinateur de bureau, pour enregistrer et transmettre des données de commande de lentilles ophtalmiques, par exemple via un protocole de communication par IP (de type Internet). Ces données de commande comportent des données de prescription relatives aux corrections à apporter aux yeux du porteur et des données de forme relatives à la monture de lunettes 10, 20 sélectionnée par le porteur.

Le terminal-fabricant comporte quant à lui une unité informatique 250 pour recevoir, enregistrer et traiter les données de commande transmises par le terminal-client. Il comporte en outre un dispositif de fabrication de lentilles ophtalmiques, comprenant par exemple de moyens de moulage de lentilles conformément aux données de prescription et des moyens de détourage de lentilles conformément aux données de forme.

Appareil de lecture de contours

Dans le terminal-client, l'opticien dispose ici d'un appareil de lecture de contours. Cet appareil de lecture de contours est un moyen bien connu de l'homme du métier et ne fait pas en propre l'objet de l'invention décrite. Il est par exemple possible d'utiliser un appareil de lecture de contours tel que décrit dans le brevet EP 0 750 172 ou commercialisé par Essilor International sous la marque Kappa ou sous la marque Kappa CT.

La figure 4 est une vue générale de cet appareil de lecture de contours 100, tel qu'il se présente à son utilisateur. Cet appareil comporte un capot supérieur 101 recouvrant l'ensemble de l'appareil à l'exception d'une portion supérieure centrale dans laquelle peut être est disposée une monture de lunettes 10 ou une lentille de présentation 27.

L'appareil de lecture de contours 100 est destiné à relever, dans le cas où la monture de lunettes sélectionnée est cerclée, la forme de l'arête de fond du drageoir de chaque cercle 11 de cette monture de lunettes 10. Il est en revanche destiné à relever, dans le cas où la monture de lunettes sélectionnée est semi-cerclée, la forme du contour de chaque lentille de présentation 27.

L'appareil de lecture de contours 100 comporte à cet effet des premiers moyens de blocage d'une monture de lunettes 10 cerclée, et des seconds moyens de blocage d'une lentille de présentation 27.

Les premiers moyens de blocage comportent un jeu de deux mâchoires 102 mobiles l'une par rapport à l'autre pour former un dispositif de serrage. Chacune des mâchoires 102 est munie de deux paires de plots 103 mobiles pour former deux pinces adaptées à serrer la monture de lunettes 10 afin de l'immobiliser.

Les seconds moyens de blocage, non visibles sur les figures, comportent un ergot qui s'étend jusque dans la portion supérieure centrale de l'appareil, et dont l'extrémité supérieure est agencée pour coopérer avec l'une des faces de la lentille de présentation 27, afin de l'immobiliser dans cette portion supérieure centrale.

Dans l'espace laissé visible par l'ouverture du capot 101, un châssis 104 est visible. Une platine (non visible) peut se déplacer en translation sur ce châssis 104 selon un axe de transfert A3. Sur cette platine est monté tournant un plateau tournant 105.

Ce plateau tournant 105 est donc apte à prendre trois positions sur l'axe de transfert A3, dont :

- une première position dans laquelle le centre du plateau tournant 105 est disposé entre les deux paires de plots 103 fixant le cercle droit de la monture de lunettes 10,
- une seconde position dans laquelle le centre du plateau tournant 105 est disposé entre les deux paires de plots 103 fixant le cercle gauche de la monture de lunettes 10, et
- une troisième position intermédiaire dans laquelle le centre du plateau tournant 105 est situé dans l'axe de l'ergot de fixation de la lentille de présentation 27.

Le plateau tournant 105 possède un axe de rotation A4 défini comme l'axe normal à la face avant de ce plateau tournant 105 et passant par son centre. Il est adapté à pivoter autour de cet axe par rapport à la platine. Le plateau tournant 105 comporte par ailleurs une lumière 106 oblongue en forme d'arc de cercle à travers laquelle un palpeur 110 fait saille. Ce palpeur 110 comporte une tige support 111 d'axe perpendiculaire au plan de la face avant du plateau tournant 105 et, à son extrémité libre, un doigt de palpage 112 d'axe perpendiculaire à l'axe de la tige support 111.

Le doigt de palpage 112 est agencé pour suivre par glissement ou éventuellement roulement l'arête de fond du drageoir de chaque cercle 11 de la monture de lunettes 10.

La tige support 111 est quant à elle agencée pour glisser le long du contour de la lentille de présentation 27.

L'appareil de lecture de forme 100 comporte des moyens d'actionnement (non représentés) adaptés, d'une première part, à faire glisser la tige support 111 le long de la lumière 106 afin de modifier sa position radiale par rapport à l'axe de rotation A4 du plateau tournant 105, d'une deuxième part, à faire varier la position angulaire du plateau tournant 105 autour de son axe de rotation A4, et, de troisième part, à positionner le doigt de palpage 112 du palpeur 110 à une altitude plus ou moins importante par rapport au plan de la face avant du plateau tournant 105.

En résumé, le palpeur 110 est pourvu de trois degrés de liberté, dont un premier degré de liberté p constitué par l'aptitude du palpeur 110 à se mouvoir radialement par rapport à l'axe de rotation A4 grâce à sa liberté de mouvement le long de l'arc de cercle formé par la lumière 106, un deuxième degré de liberté $\theta$ constitué par l'aptitude du palpeur 110 à pivoter autour de l'axe de rotation A4 grâce à la rotation du plateau tournant 105 par rapport à la platine, et un troisième degré de liberté z constitué par l'aptitude du palpeur 110 à se translater selon un axe parallèle à l'axe de rotation A4 du plateau tournant 105.

Chaque point lu par l'extrémité du doigt de palpage 112 du palpeur 110 est repéré dans un référentiel, appelé référentiel de porté de la monture.

Ce référentiel est ici caractérisé par un repère orthonormé comportant un axe horizontal $X_1$ parallèle audit axe de transfert A3, un axe d'ordonnée $Y_1$ orthogonal aux axes de transfert A3 et de rotation A4, et un axe normal $Z_1$.

L'appareil de lecture de contours 100 comporte en outre un dispositif électronique et/ou informatique 120 permettant, d'une part, de piloter les moyens d'actionnement de l'appareil de lecture de forme 100, et, d'autre part, d'acquérir et de transmettre à l'unité informatique 150 les coordonnées de l'extrémité du doigt de palpage 112 du palpeur 110.

Procédé d'élaboration de consignes de détourage

Le procédé de préparation d'une lentille ophtalmique 30 en vue de son montage dans un entourage 11, 21 d'une monture de lunettes 10, 20 comporte deux phases principales, dont une première phase d'élaboration d'une consigne de détourage, et une seconde phase de détourage de la lentille ophtalmique suivant cette consigne de détourage.

La seconde phase de détourage se déroule généralement en trois opérations successives, dont :

- une opération d'ébauche de détourage qui consiste à ramener le contour initialement circulaire de la lentille ophtalmique à une forme proche de celle désirée, c'est-à-dire à une forme proche de celle de l'entourage de la monture de lunettes sélectionnée,
- une opération de finition qui consiste à former une nervure d'emboîtement ou une rainure d'emboîtement sur la tranche de la lentille ophtalmique en vue de son montage sur une monture de lunettes respectivement cerclée ou semi-cerclée, et,
- une opération de surfinition qui consiste à polir la tranche de la lentille et/ou à chanfreiner ses arêtes vives.

L'invention portant plus précisément sur la première phase d'élaboration de la consigne de détourage, cette seconde phase de détourage bien connue de l'Homme du métier ne sera pas ici décrite plus en détail.

La première phase d'élaboration de la consigne de détourage se décompose en sept opérations successives.

Première opération

La première opération consiste à définir les besoins du porteur de lunettes.

Pour cela, le porteur se rend successivement chez un optométriste et chez un opticien.

L'optométriste procède à différents examens relatifs à l'acuité visuelle du porteur, de manière à déterminer des prescriptions qui permettront de mouler deux lentilles ophtalmiques adaptées à chacun des yeux du porteur. Il détermine en particulier, le type unifocale, bifocale ou progressif des lentilles ophtalmiques, et les propriétés de réfringence sphérique, cylindrique et prismatique de ces lentilles.

L'opticien propose quant à lui au porteur de sélectionner une monture de lunettes 10, 20 qui lui convient, ici une monture de lunettes cerclée ou semi-cerclée. Il procède ensuite aux mesures nécessaires au centrage des lentilles ophtalmiques sur la monture sélectionnée, de manière qu'une fois assemblées à la monture, les lentilles soient correctement centrées en regard des yeux du porteur afin d'exercer au mieux les fonctions optiques pour lesquelles elles sont conçues.

L'opticien détermine en particulier la position des points pupillaires du porteur dans le référentiel de porté de la monture. Ces points pupillaires correspondent aux points disposés en regard des pupilles du porteur sur les lentilles équipant la monture sélectionnée. Les points pupillaires sont plus particulièrement repérés par rapport au contour de chaque entourage 11, 21 de la monture de lunettes 10, 20 sélectionnée, au moyen de deux paramètres appelés écart pupillaire et hauteur pupillaire. L'écart pupillaire correspond à la plus grande distance horizontale entre le point pupillaire et la zone nasale de l'entourage. La hauteur pupillaire correspond à la plus grande distance verticale entre le point pupillaire et la zone basse de l'entourage.

Seconde opération

La seconde opération consiste à acquérir les formes des contours des entourages 11, 21 de la monture de lunettes 10, 20 sélectionnée.

Cette étape d'acquisition peut être réalisée de différentes manières.

Elle est ici réalisée en palpant les cercles 11 de la monture de lunettes cerclée 10 ou les lentilles de présentation 27 de la monture de lunettes semi-cerclée 20.

Cette étape d'acquisition est ici menée sur un appareil de lecture de contours 100 tel que celui représenté sur la figure 4.

Pour cela, dans un premier temps, la monture de lunettes 10 ou la lentille de présentation 27 est immobilisée dans les premiers ou seconds moyens de blocage de l'appareil de lecture de contours 100.

S'il s'agit d'une monture de lunettes cerclée, cette dernière est immobilisée de telle sorte que chacun de ses cercles 11 est prêt à être palpé selon un trajet qui démarre entre les deux plots 103 enserrant la partie inférieure du cercle 11 correspondant de la monture, et qui suit le drageoir du cercle 11 afin de couvrir toute la circonférence de ce cercle 11.

En position initiale, lorsque le doigt de palpage 112 est disposé entre les deux plots 103, le dispositif électronique et/ou informatique 120 définit comme nulles la position angulaire $\theta_1$ et l'altitude $Z_1$ de l'extrémité du doigt de palpage 112 du palpeur 110.

Les moyens d'actionnement font ensuite pivoter le plateau tournant 105 sur une révolution complète. Lors de ce pivotement, les moyens d'actionnement imposent un effort radial constant sur le palpeur 110 en direction du cercle 11, pour que le doigt de palpage 112 du palpeur 110 glisse le long de l'arête de fond du drageoir du cercle 11, sans remonter le long des flancs avant et arrière du drageoir.

Le dispositif électronique et/ou informatique 120 relève pendant la rotation du plateau tournant 105 les coordonnées spatiales $\rho_1$, $\theta_1$, $z_1$ d'une pluralité de points $P_1$ de l'arête de fond du drageoir (par exemple 360 points séparés angulairement de 1 degré), repérés dans le repère $X_1$, $Y_1$, $Z_1$. Les 360 points palpés $P_1$ correspondent ainsi à la trace de l'arête de fond du drageoir dans 360 sections transversales du cercle 11 séparées angulairement de 1 degré. Comme le montre la figure 7, ces 360 points palpés $P_1$ définissent ainsi un profil longitudinal 50 de l'entourage 11, sensiblement confondu avec l'arête de fond du drageoir.

S'il s'agit d'une monture de lunettes semi-cerclée, l'une de ses lentilles de présentation 27 est immobilisée au centre de l'ouverture supérieure centrale du capot 101, de manière à ce que sa tranche puisse être palpée sur l'ensemble de son contour par la tige support 111.

En position initiale, lorsque la tige support 111 est disposé contre la tranche de la lentille de présentation 27, le dispositif électronique et/ou informatique 120 définit comme nulle la position angulaire $\theta_1$ du palpeur 110.

Les moyens d'actionnement font ensuite pivoter le plateau tournant 105. Lors de ce pivotement, les moyens d'actionnement imposent un effort radial constant sur le palpeur 110 en direction de l'axe de rotation A4, pour que la tige support 111 du palpeur 110 reste au contact de la tranche de la lentille de présentation 27.

Le dispositif électronique et/ou informatique 120 relève pendant la rotation du plateau tournant 105 les coordonnées planes $\rho_1$, $\theta_1$ d'une pluralité de points $P_1$ de la tranche de la lentille de présentation 27 (par exemple 360 points séparés angulairement de 1 degré). Ces 360 points palpés $P_1$ définissent ici également un profil longitudinal de l'entourage 21 de la monture de lunettes semi-cerclée.

Puis, quel que soit le type cerclé ou semi-cerclé de la monture de lunettes sélectionnée, les coordonnées planes $\rho_1$, $\theta_1$ ou spatiales $\rho_1$, $\theta_1$, $z_1$ des 360 points palpés $P_1$ sont ensuite transmises par le dispositif électronique et/ou informatique 120 à l'unité informatique 150 du terminal-client.

Cette étape d'acquisition pourrait également être réalisée autrement.

Elle pourrait par exemple être réalisée en palpant l'un des cercles 11 ou l'une des lentilles de présentation 27 de la monture de lunettes 10, 20 sélectionnée (selon la méthode exposée ci-dessus), puis en corrigeant la forme du profil longitudinal palpé en fonction d'un paramètre de correction.

Ce paramètre de correction pourra être déterminé en fonction de l'architecture de l'appareil de lecture de contours 100, et/ou de l'architecture de l'appareil destiné à usiner la lentille ophtalmique 30, et/ou de la forme de la monture de lunettes 10, 20 sélectionnée.

Ce paramètre de correction pourra par exemple être calculé en fonction :

- de l'effort qu'exerce le palpeur 110 sur le cercle 11 de la monture de lunettes 10 sélectionnée, pour tenir compte de la déformation du cercle lors de son palpage ;
- du diamètre de la pointe du doigt de palpage 112 du palpeur 110, pour tenir compte du fait que la pointe du doigt de palpage 112 est trop épaisse pour venir au contact du fond du drageoir du cercle 11 lors de son palpage ;
- de la forme de la section du drageoir du cercle 11 et de la forme de la section de la meule destinée à former un biseau sur la tranche de la lentille ophtalmique 30, pour tenir compte du fait qu'en raison des différences de formes des sections du biseau et du drageoir, le biseau ne s'emboîte pas parfaitement dans le drageoir du cercle 11 de la monture de lunettes 10 sélectionnée.

Ce paramètre de correction pourra être calculé de manière à être constant le long du profil longitudinal palpé. Il pourra également être calculé de manière à varier le long de ce profil, afin par exemple de tenir compte des variations de la forme du drageoir le long du cercle de la monture de lunettes sélectionnée.

L'étape d'acquisition du profil longitudinal de l'entourage pourraient être réalisée à l'aide d'un registre de base de données. Un tel registre comporterait à cet effet une pluralité d'enregistrements qui seraient chacun associés à un modèle de montures de lunettes et qui comprendraient chacun les cordonnées d'une pluralité de points caractérisant les formes des entourages de ce modèle de montures de lunettes.

Les coordonnées du profil longitudinal de l'entourage pourraient également être acquises optiquement, à l'aide d'un appareil laser ou d'un appareil de capture et de traitement d'images agencé pour déterminer, à partir d'un cliché de la monture de lunettes sélectionnée, les coordonnées d'une pluralité de points de chacun de ses entourages.

Ici, à l'issue de cette seconde opération, l'unité informatique 150 du terminal-client transmet l'ensemble des données acquises à l'unité informatique 250 du terminal-fabricant. Ces données comportent en particulier les prescriptions du porteur et les coordonnées des 360 points palpés $P_1$.

Ces données sont alors utilisées pour mouler les deux lentilles ophtalmiques du porteur et pour usiner leurs faces optiques à la forme souhaitée, selon des procédés qui ne font pas l'objet de la présente invention.

Elles sont ensuite utilisées pour détourer les lentilles ophtalmiques ainsi obtenues, afin de ramener leurs contours à la forme souhaitée, comme cela sera détaillé dans la suite de cet exposé.

Troisième opération

La troisième opération consiste en un calcul de la longueur périmétrique $l_1$ de l'entourage 11, 21 de la monture de lunettes 10, 20 sélectionnée.

Pour élaborer la consigne de détourage, l'unité informatique 250 doit en effet déterminer cet autre paramètre de détourage, de manière que la lentille ophtalmique 30 une fois détourée puisse présenter un contour de longueur périmétrique égale à la longueur périmétrique de l'entourage 11, 21.

Le calcul de la longueur périmétrique $l_1$ de l'entourage 11, 21 diffère selon que la monture de lunettes 10, 20 sélectionnée est cerclée ou semi-cerclée.

Dans le cas où la monture de lunettes 10 est cerclée, le calcul est réalisé à partir des coordonnées spatiales $x_{1,i}$, $y_{1,i}$, $z_{1,i}$ des 360 points palpés $P_{1,i}$, selon la formule suivante :

$$l_1 = \sum_{i=0}^{359} \sqrt{(x_{1,i+1} - x_{1,i})^2 + (y_{1,i+1} - y_{1,i})^2 + (z_{1,i+1} - z_{1,i})^2}$$

Dans le cas où la monture de lunettes 20 est semi-cerclée, seules les coordonnées planes $x_1$, $y_1$ de 360 points palpés $P_1$ sont connues, ce qui ne permet pas de calculer la longueur périmétrique $l_1$ de l'entourage 21.

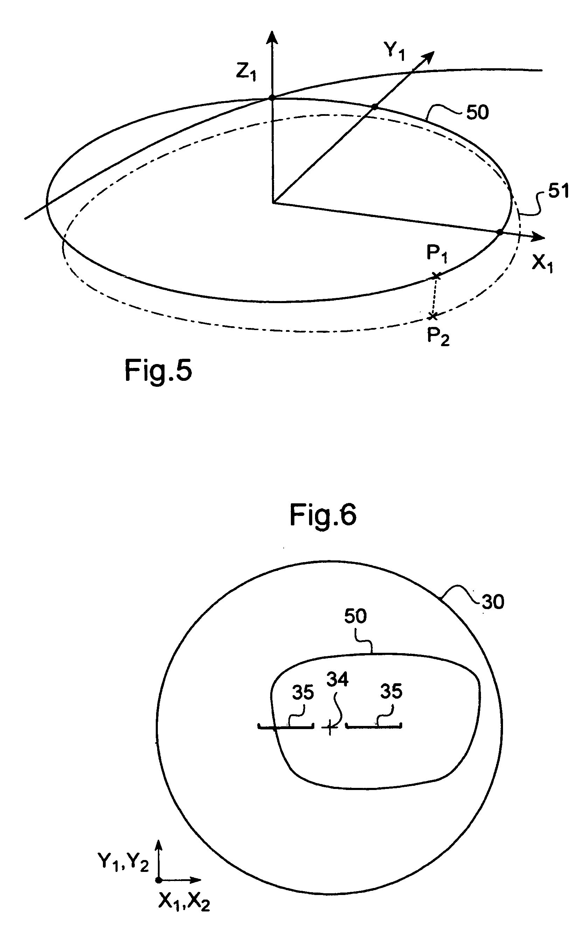

Le profil longitudinal ayant été acquis en deux dimensions dans le plan $(X_1; Y_1)$, il s'agit alors, comme le montre plus particulièrement la figure 5, de déformer ce profil longitudinal acquis 50 de manière à lui conférer une courbure (suivant l'axe $Z_1$) qui correspond à la courbure de l'entourage 21.

Pour cela, l'unité informatique détermine les coordonnées spatiales $x_2$, $y_2$, $z_2$ de 360 points $P_2$ d'un profil courbé 51, issus de la projection des 360 points $P_1$ sur une surface de référence prédéterminée.

Cette surface de référence prédéterminée est ici représentative de la forme de la face avant de la lentille de présentation 27. Elle est ici sphérique. Son rayon de courbure $Rc_1$ est égal à un rayon de courbure moyen, calculé à partir des rayons de courbure d'une variété représentative de lentilles de présentation (les rayons de courbure des lentilles de présentation sont effectivement généralement identiques ou homologues).

La projection est ici une projection orthogonale suivant l'axe normal $Z_1$. Par conséquent, les coordonnées planes $x_2$, $y_2$ des 360 points projetés $P_2$ du profil courbé 51 sont égales aux coordonnées planes $x_1$, $y_1$ des 360 points du profil longitudinal acquis 50.

Autrement formulé, la projection du profil longitudinal acquis 50 consiste, pour l'unité informatique 250, en un simple calcul des altitudes $z_2$ des points $P_2$ du profil courbé 51 en fonction du rayon de courbure $Rc_1$ et des coordonnées planes $x_1$, $y_1$ des points $P_1$, selon la formule suivante :

$$z_2 = Rc_1 - \sqrt{Rc_1^2 - \rho_1^2} \quad , \text{ avec } \rho_1 = (x_1^2 + y_1^2)^{1/2}$$

Les coordonnées spatiales $x_2$, $y_2$, $z_2$ des points $P_2$ du profil courbé 51 étant connues, l'unité informatique 250 calcule alors la longueur périmétrique $l_2$ du profil courbé 51, selon la formule suivante :

$$l_2 = \sum_{i=0}^{359} \sqrt{(x_{2,i+1} - x_{2,i})^2 + (y_{2,i+1} - y_{2,i})^2 + (z_{2,i+1} - z_{2,i})^2}$$

Cette longueur périmétrique $l_2$ du profil courbé 51 est considérée égale à la longueur périmétrique $l_1$ de l'entourage 21.

Quatrième opérations

La quatrième opération consiste à centrer, orienter et projeter le profil longitudinal de l'entourage 11, 21 sur la lentille ophtalmique 30 de telle manière qu'une fois assemblée à la monture de lunettes, la lentille détourée suivant ce profil longitudinal projeté se trouve convenablement centrée en regard de la pupille de l'oeil correspondant du porteur.

A l'étape de centrage, comme le montre la figure 6, il s'agit de mettre le référentiel de porté de la monture de lunettes 10, 20 en coïncidence avec le référentiel optique de la lentille ophtalmique 30.

Cette mise en coïncidence est réalisée en alignant les axes horizontaux $X_1$, $X_2$, les axes d'ordonnée $Y_1$, $Y_2$, et les axes normaux $Z_1$, $Z_2$ des repères associés à ces deux référentiels, puis en centrant le point pupillaire (et donc le profil longitudinal) repéré dans le repère $X_1$, $Y_1$, $Z_1$ de la monture sur le point de centrage 34 repéré dans le repère $X_2$, $Y_2$, $Z_2$ de la lentille.

A l'étape d'orientation, il s'agit d'orienter le profil longitudinal de l'entourage 11, 21 autour du point de centrage 34 suivant un angle déterminé par rapport aux traits d'horizon 35 de lentille ophtalmique 30. Cet angle est déterminé par l'optométriste, et est donc compris dans les prescriptions du porteur. Il permet de s'assurer qu'une fois la lentille montée dans l'entourage, la répartition de ses puissances optiques convient à l'oeil correspondant du porteur.

A l'étape de projection, il s'agit de rectifier le profil longitudinal de l'entourage 11, 21, qui ne présente pas une courbure identique à celle de la lentille ophtalmique 30, afin de lui conférer une telle courbure.

Cette étape est plus précisément réalisée en projetant le profil longitudinal de l'entourage 11, 21 sur une surface déduite d'un paramètre de courbure de la lentille ophtalmique, de manière à pouvoir déduire le contour suivant lequel la lentille ophtalmique 30 devra être détourée. En l'espèce, cette surface correspond à la face avant 31 de la lentille ophtalmique 30.

Bien sûr, en variante, cette projection pourrait être réalisée sur une autre surface caractéristique de la lentille ophtalmique 30. Elle pourrait par exemple être réalisée sur la face arrière 32 de la lentille ophtalmique 30. Elle pourrait aussi être réalisée sur une surface intermédiaire présentant une courbure identique à celle de l'une des faces avant 31 et arrière 32 de la lentille ophtalmique, c'est-à-dire sur une surface qui est située entre les faces avant 31 et arrière 32 de la lentille ophtalmique 30 et qui est parallèle à la surface de l'une de ces faces avant 31 et arrière 32. Elle pourrait également être réalisée sur une surface sphérique située entre les faces avant 31 et arrière 32 et présentant un rayon de courbure déduit des courbures des faces avant 31 et arrière 32.

Ici, comme le montre la figure 7, la projection est une projection orthogonale suivant l'axe normal $Z_2$. Par conséquent, les coordonnées planes $x_3$, $y_3$ des 360 points $P_3$ du profil longitudinal projeté 52 sont égales aux coordonnées planes $x_1$, $y_1$ des 360 points du profil longitudinal acquis 50.

Autrement formulé, la projection du profil longitudinal acquis 50 consiste, pour l'unité informatique 250, en un simple calcul des altitudes $z_3$ des points $P_3$ du profil longitudinal projeté 52.

La face avant de la lentille ophtalmique 30 étant ici sphérique et présentant un rayon de courbure $Rc_3$ connu, le calcul des altitudes $z_3$ des points $P_3$ du profil longitudinal projeté 52 est réalisé selon la formule suivante :

$$z_3 = \sqrt{Rc_3^2 - \rho_1^2} - Rc_3 \quad , \text{ avec } \rho_1 = (x_1^2 + y_1^2)^{1/2}$$

Cinquième opération

Les coordonnées spatiales $x_3$, $y_3$, $z_3$ des points $P_3$ du profil longitudinal projeté 52 étant connues, l'unité informatique 250 corrige au cours de la cinquième opération la forme du profil longitudinal projeté 52, de manière que le profil longitudinal corrigé 53 présente une longueur périmétrique $l_4$ égale à la longueur périmétrique $l_1$ du profil longitudinal acquis 50.

Cette correction est réalisée en deux étapes, ici successives, consistant à:

i) étirer, selon une fonction mathématique f donnée, le profil longitudinal projeté 52 suivant l'axe d'ordonnée $Y_2$ (figure 8), puis à

ii) comprimer le profil longitudinal étiré 52' suivant l'axe horizontal $X_2$ jusqu'à égaliser les longueurs périmétriques $l_1$, $l_4$ du profil longitudinal corrigé 53 et du profil longitudinal acquis 50.

A l'étape i), l'étirement du profil longitudinal projeté 52 suivant l'axe d'ordonnée $Y_2$ permet de s'assurer que la tranche de la lentille ophtalmique 30 montée dans son entourage 11, 21 appuie correctement sur les parties basse et haute de l'entourage 11, 21.

La fonction mathématique f d'étirement de ce profil longitudinal projeté 52 est indépendante des différences entre les longueurs périmétriques des différents profils longitudinaux.

Cette fonction mathématique *f* est une affinité vectorielle autour de l'axe horizontal $X_2$ (également connue sous le terme de « dilatation ») appliquée aux coordonnées planes $x_3$, $y_3$ des points $P_3$ du profil longitudinal projeté 52. Cette affinité vectorielle présente un rapport k, appelé coefficient d'étirement.

Cette fonction peut ainsi s'exprimer sous la forme :

$f(y_3) = y_3' = k \cdot y_3$, avec k préférentiellement compris entre 1 et 1,05 (voir figure 8).

Ce coefficient d'étirement k peut être déterminé de différentes manières.

Dans un premier mode de réalisation, on peut prévoir que le coefficient d'étirement k soit constant pour l'ensemble des points $P_3$ traités, et qu'il soit prédéterminé. Il peut par exemple être choisi égal à 1,03.

Dans un second mode de réalisation, on peut prévoir que le coefficient d'étirement k soit constant pour l'ensemble des points $P_3$ traités, mais qu'il soit déterminé en fonction de la forme de la lentille ophtalmique et/ou de la forme de la monture de lunettes, et/ou du matériau de la monture de lunettes.

Afin de calculer ce coefficient d'étirement k, l'unité informatique 250 pourra par exemple être programmée pour, d'une part, déterminer le rayon de courbure moyen $Rc_{50}$ de l'entourage 11, 21, et d'autre part, acquérir le matériau de la monture de lunettes 10, 20.

Puis, si le rayon de courbure moyen $Rc_{50}$ est supérieur ou égal au rayon de courbure $Rc_3$ de la lentille ophtalmique 30, elle affecte la valeur 1 au coefficient d'étirement k, de manière que la fonction mathématique f soit la fonction identité.

Si le rayon de courbure moyen $Rc_{50}$ est inférieur au rayon de courbure $Rc_3$ de la lentille ophtalmique 30 et si le matériau de la monture est du plastique, elle affecte la valeur 1,03 au coefficient d'étirement k.

Enfin, si le rayon de courbure moyen Rcso est inférieur au rayon de courbure $Rc_3$ de la lentille ophtalmique 30 et si le matériau de la monture est du métal, elle affecte la valeur 1,035 au coefficient d'étirement k.

Ainsi, le profil longitudinal projeté 52 est étiré d'environ 3% suivant l'axe $Y_2$ seulement si la cambrure de la lentille ophtalmique 30 est supérieure à celle de l'entourage 11, 21. Il est par ailleurs plus ou moins étiré, selon que la monture de lunettes est réalisée dans un matériau élastiquement déformable ou non.

Dans un troisième mode de réalisation préférentiel, on peut prévoir que le coefficient d'étirement k soit une variable qui s'exprime sous la forme d'une fonction $j(x_3)$, et qui dépend donc de l'abscisse $x_3$ du point $P_3$ considéré.

Le coefficient d'étirement k est alors déterminé pour varier continument suivant une distribution dite en demi-cercle, afin d'être égal à 1 au niveau des points $P_3$ du profil longitudinal projeté 52 dont les abscisses $x_{3max}$, $x_{3min}$ sont maximales et minimales, et d'être égal à un seuil maximum Smax supérieur à 1 au niveau des points $P_3$ dont les abscisses $x_3$ sont égales à la moyenne des abscisses maximales et minimales.

Le coefficient d'étirement k pourra par exemple s'exprimer sous la forme suivante :

$$k = j(x_3) = 1 + 4 \cdot Smax \cdot \frac{(x_3 - x_{3min}) \cdot (x_{3max} - x_3)}{(x_{3max} - x_{3min})^2}$$

Ce seuil maximum Smax est préférentiellement prédéterminé et égal à 1,03. Il pourra également être déterminé en fonction de la forme de la lentille ophtalmique et/ou de la forme de la monture de lunettes, et/ou du matériau de la monture de lunettes. Il pourra par exemple être déterminé en fonction, d'une part, des cambrures de l'entourage 11, 21 et de la lentille ophtalmique 30, et, d'autre part, du matériau de la monture de lunettes 10, 20, selon une méthode identique à celle exposée ci-dessus.

Quoi qu'il en soit, à l'issue de cette étape i), l'unité informatique 250 obtient les coordonnées spatiales $x_3$, $y_3'$, $z_3$ des points $P_3'$ du profil longitudinal étiré 52'.

A l'étape ii), elle modifie les abscisses $x_3$ de ces points $P_3'$, de manière à obtenir un profil longitudinal corrigé 53 de longueur périmétrique $l_4$ égale à la longueur périmétrique ll du profil longitudinal acquis 50 (figure 9).

Au cours de cette étape, les abscisses $x_3$ des points $P_3'$ sont modifiées par itération suivant la formule suivante :

$$x_{3j+1} = x_{3j} \cdot \left(1 + \frac{l_1 - l_{3,j}}{l_1}\right) \quad,$$

avec $l_{3j}$ la longueur périmétrique du profil longitudinal caractérisé par les points de coordonnées $x_{3,j}$, $y_3'$, $z_3$.

Lorsque cette longueur périmétrique $l_{3,j}$ devient égale, à 0,1% près, à la longueur périmétrique $l_1$ du profil longitudinal acquis 50, l'unité informatique stoppe cette itération et mémorise les coordonnées spatiales $x_4$, $y_4$, $z_4$ des points $P_4$ du profil longitudinal corrigé 53.

En variante, au cours de cette étape ii), on pourrait prévoir de modifier non seulement les abscisses $x_3$ de ces points $P_3'$, mais aussi les ordonnées $y_3$ de ces points $P_3'$, pour autant que, d'une part, le profil longitudinal corrigé 53 présente une longueur périmétrique $l_4$ égale à la longueur périmétrique $l_1$ du profil longitudinal acquis 50, et que, d'autre part, le profil longitudinal corrigé 53 reste plus allongé que le profil longitudinal projeté 52 suivant l'axe d'ordonnée $Y_2$.

<u>Sixième opération</u>

Comme le montrent les figures 10 et 11, la correction apportée au profil longitudinal projeté 52 engendre une différence de hauteurs (selon l'axe d'ordonnée $Y_2$) entre, d'une part, le segment qui relie le point de centrage 34 et le point le plus bas du profil longitudinal projeté 52, et, d'autre part, le segment qui relie le point de centrage 34 et le point le plus bas du profil longitudinal corrigé 53.

Cette différence de hauteurs génère un décalage entre la hauteur pupillaire Hp transmise par l'opticien au terminal-fabricant (qui a permis de centrer le profil longitudinal projeté 52 sur la lentille ophtalmique 30) et la hauteur pupillaire Hp' mesurable sur la lentille ophtalmique détourée suivant le profil longitudinal corrigé 53.

Par conséquent, lorsque l'opticien recevra la lentille ophtalmique 30 détourée et qu'il contrôlera qu'elle a été correctement centrée, il constatera un décalage $d_{Hp}$ entre la hauteur pupillaire Hp' mesurée et la hauteur pupillaire Hp initialement transmise au terminal-fabricant.

La sixième opération consiste alors à déterminer ce décalage $d_{Hp}$, de manière à pouvoir le transmettre à l'opticien afin que celui-ci ne considère pas ce décalage comme une erreur.

Pour cela, deux cas de figures sont à considérer.

Considérons tout d'abord le cas où le point pupillaire est situé en un point d'abscisse $x_p$ et d'ordonnée $y_p$ positif (figure 10). Ce point pupillaire est alors situé au-dessus de l'axe horizontal $X_2$ (d'ordonnée y = 0). Dans ce cas, le décalage $d_{Hp}$ s'exprime sous la forme :

$d_{Hp}$ = Hp1 . (k(xp) - 1), avec Hp1 correspondant à la moitié de la hauteur maximal du profil longitudinal projeté 52 suivant l'axe d'ordonnée $Y_2$.

Considérons maintenant le cas où le point pupillaire est situé en un point d'abscisse $x_p$ et d'ordonnée $y_p$ négatif (figure 11). Ce point pupillaire est alors situé en dessous de l'axe horizontal $X_2$. Dans ce cas, le décalage $d_{Hp}$ s'exprime sous la forme :

$$d_{Hp} = (Hp1 + y_p) \cdot (k(x_p) - 1), \text{ avec } y_p < 0.$$

La nouvelle hauteur pupillaire Hp' que mesurera alors l'opticien sur la lentille ophtalmique 30 s'exprimera alors ainsi :

$$Hp' = Hp + d_{Hp}.$$

Septième opération

La septième opération consiste à déterminer une consigne d'ébauche et de finition du détourage de la lentille ophtalmique 30, de manière à la détourer suivant ce profil longitudinal corrigé 53. Elle consiste également à déterminer une consigne de surfinition du détourage de la lentille ophtalmique, de manière à la polir et/ou à la chanfreiner.

Cette septième opération varie en fonction de l'architecture du dispositif de détourage utilisé. Elle ne sera donc pas exposée ici en détail.

La présente invention n'est nullement limitée aux modes de réalisation décrits et représentés, mais l'homme du métier saura y apporter toute variante conforme à son esprit.

En particulier, les troisième, quatrième et sixième opérations pourront être réalisées, non par par l'unité informatique 250 du terminal fabricant, mais par toute autre unité informatique programmée à cet effet, par exemple par l'unité informatique du terminal-client.

Dans un autre mode de réalisation de l'invention, on peut prévoir que les étapes de projection du profil longitudinal de l'entourage 11, 21 sur une surface courbée et de correction du profil longitudinal projeté 52 soient réalisées non pas après l'étape de centrage de la lentille ophtalmique 30, mais avant cette étape de centrage.

Par conséquent, lorsque ces étapes de projection et de correction sont mises en oeuvre, la géométrie de la lentille ophtalmique 30 n'est pas encore connue. Lors de l'étape de projection, il est alors seulement possible de projeter le profil longitudinal acquis 50 sur une surface approchant la forme de l'une des faces 31, 32 de la lentille ophtalmique 30. Cette surface approchante est alors calculée en fonction d'un paramètre caractéristique de la courbure non pas de la lentille ophtalmique, mais plutôt de la monture de lunettes.

Pour cela, dans le cas d'une monture de lunettes cerclée 10, après que le dispositif électronique et/ou informatique 120 de l'appareil de lecture de contours 100 a acquis les coordonnées spatiales $\rho_1$, $\theta_1$, $z_1$ des 360 points palpés $P_1$, il acquiert les coordonnées spatiales d'au moins trois points situés sur la face avant du cercle 11. Il en déduit par calcul le paramètre de courbure précité, qui correspond ici au rayon de courbure de la sphère dont l'écart-type à l'ensemble des points palpés sur la face avant du cercle 11 est minimum.

La projection des 360 points palpés $P_1$ est alors réalisée sur cette sphère, qui est considérée comme une approximation de la forme de la face avant de la lentille ophtalmique.

En effet, lors de son usinage, une lentille ophtalmique 30 est généralement biseautée de telle manière qu'une fois emboîtée dans son cercle 11, sa face avant 31 affleure esthétiquement la face avant du cercle 11. Par conséquent, en acquérant la forme de la face avant du cercle de la monture de lunettes, il est possible de déterminer la courbure d'une surface approchant la forme de la face avant 31 de la lentille ophtalmique 30.

L'étape de projection permet ainsi d'obtenir un profil longitudinal projetée dont la courbure correspond sensiblement à la courbure de la face avant de la lentille ophtalmique 30.

Dans ce mode de réalisation, les étapes de correction et de centrage sont ensuite réalisées à partir de ce profil longitudinal projeté, en suivant un procédé identique à celui exposé précédemment.

**Revendications**

1. Procédé d'élaboration d'une consigne de détourage d'une lentille ophtalmique (30) en vue de son montage dans un entourage (11, 21) d'une monture de lunettes (10, 20), comportant les étapes consistant à :

   a) dans un référentiel de l'entourage (11, 21) repéré par un axe horizontal ($X_1$), acquérir la forme d'un profil longitudinal (50) dudit entourage (11, 21) et la longueur périmétrique ($I_1$) de ce profil longitudinal acquis (50) ;
   b) dans un référentiel optique de la lentille ophtalmique (30) qui est repéré par un point de centrage (34) et par un axe horizontal ($X_2$) et qui est mis en coïncidence avec le référentiel de l'entourage, centrer et orienter ledit profil longitudinal acquis (50),
   c) projeter ledit profil longitudinal acquis (50) sur une surface courbée déduite d'un paramètre de courbure de ladite lentille ophtalmique (30) ou d'un paramètre de courbure de ladite monture de lunettes (10, 20),
   d) corriger la forme dudit profil longitudinal projeté (52), de manière à égaliser sa longueur périmétrique ($I_3$) avec la longueur périmétrique ($I_1$) du profil longitudinal acquis (50),
   e) déduire dudit profil longitudinal corrigé (53) ladite consigne de détourage,

   **caractérisé en ce qu'**à l'étape d), la correction est réalisée en deux opérations consistant à :

   - étirer, selon une fonction mathématique (f) donnée, le profil longitudinal projeté (52) suivant un axe d'ordonnée ($Y_1$, $Y_2$) transversal audit axe horizontal ($X_1$, $X_2$), et à
   - comprimer le profil longitudinal étiré (52') suivant un axe ($X_1$, $X_2$) orthogonal audit axe d'ordonnée ($Y_1$, $Y_2$).

2. Procédé selon la revendication 1, dans lequel, ledit référentiel optique étant également repéré par un axe normal ($Z_2$) perpendiculaire au plan tangent de la lentille ophtalmique (30) au point de centrage (34), ledit axe d'ordonnée ($Y_2$) est orthogonal auxdits axes horizontal ($X_2$) et normal ($Z_2$).

3. Procédé selon l'une des revendications 1 et 2, dans lequel les étapes a) à e) sont successivement réalisées les unes à la suite des autres et dans lequel ladite surface courbée est déduite du paramètre de courbure de ladite lentille ophtalmique (30).

4. Procédé selon l'une des revendications 1 et 2, dans lequel les étapes c) et d) sont réalisées avant l'étape b) et dans lequel ladite surface courbée est déduite du paramètre de courbure de l'entourage de ladite monture de lunettes (10, 20).

5. Procédé selon l'une des revendications 1 à 4, dans lequel, à l'étape d), les deux opérations de correction sont réalisées successivement et dans lequel, lors de l'opération de compression, le profil longitudinal étiré (52') est également comprimé suivant l'axe d'ordonnée ($Y_1$, $Y_2$) de telle manière que le profil longitudinal corrigé (53) reste plus allongé que le profil longitudinal projeté (52) suivant l'axe d'ordonnée ($Y_1$, $Y_2$).

6. Procédé selon l'une des revendications 1 à 5, dans lequel ladite fonction mathématique (f) est indépendante de la différence entre lesdites longueurs périmétriques ($I_1$, $I_3$).

7. Procédé selon l'une des revendications 1 à 6, dans lequel la fonction mathématique (f) est une dilatation autour de l'axe horizontal ($X_2$), de rapport (k) appelé coefficient d'étirement.

8. Procédé selon l'une des revendications 1 à 7, dans lequel la fonction mathématique (f) présente un coefficient d'étirement (k) prédéterminé.

9. Procédé selon l'une des revendications 1 à 7, dans lequel la fonction mathématique (f) présente un coefficient d'étirement (k) déterminé en fonction de la forme de la lentille ophtalmique (30) et/ou de la forme de la monture de lunettes (10, 20) et/ou du matériau de la monture de lunettes (10, 20).

10. Procédé selon l'une des revendications 1 à 7, dans lequel la fonction mathématique (f) présente un coefficient d'étirement (k) variable en fonction de la position du point considéré sur le profil longitudinal projeté (52).

11. Procédé selon l'une des revendications 9 et 10, dans lequel le coefficient d'étirement (k) est déterminé en fonction d'une caractéristique de cambrure de l'entourage (11, 21).

**12.** Procédé selon la revendication 11, dans lequel si ladite caractéristique de cambrure est inférieure à un seuil déterminé, le coefficient d'étirement (k) est égal à 1 en tout point du profil longitudinal projeté (52) et ladite fonction mathématique (*f*) est la fonction identité, sinon, le coefficient d'étirement (k) est strictement supérieur à 1 en au moins une partie du profil longitudinal projeté (52).

**13.** Procédé selon l'une des revendications 1 à 12, dans lequel ladite surface courbée est la face avant (31) ou arrière (32) de la lentille ophtalmique (30)ou est située entre les faces avant (31) et arrière (32) de la lentille ophtalmique (30).

**14.** Procédé selon l'une des revendications 1 à 13, dans lequel ladite projection est une projection orthogonale suivant un axe normal ($Z_2$) à l'axe horizontal ($X_2$).

**15.** Procédé selon l'une des revendications 1 à 14, dans lequel, à l'étape a), on acquiert les coordonnées spatiales ($x_1$, $y_1$, $z_1$) d'une pluralité de points ($P_1$) caractérisant la forme dudit profil longitudinal acquis (50), et on calcule la longueur périmétrique ($l_1$) dudit profil longitudinal acquis (50) à partir de ces coordonnées spatiales ($x_1$, $y_1$, $z_1$).

**Claims**

**1.** A method for generating a trimming setpoint for trimming an ophthalmic lens (30) that is to be fitted in a surround (11, 21) of a spectacle frame (10, 20), comprising steps consisting in:

a) within a coordinate system of the surround (11, 21) identified by a horizontal axis ($X_1$), acquiring the shape of a longitudinal profile (50) of said surround (11, 21) and the perimeter length ($l_1$) of this acquired longitudinal profile (50);
b) within an optical coordinate system of the ophthalmic lens (30) which is identified by a centering point (34) and by a horizontal axis ($X_2$) and which is made to coincide with the coordinate system of the surround, centering and orienting said acquired longitudinal profile (50),
c) projecting said acquired longitudinal profile (50) onto a curved surface deduced from a curvature parameter of said ophthalmic lens (30) or from a curvature parameter of said spectacle frame (10, 20),
d) correcting the shape of said projected longitudinal profile (52), so as to equalize its perimeter length ($l_3$) with the perimeter length ($l_1$) of the acquired longitudinal profile (50),
e) deducing from said corrected longitudinal profile (53) said trimming setpoint,

the method being **characterized** that, in step d), the correction is made in two operations consisting in:

- stretching, according to a given mathematical function (*f*), the projected longitudinal profile (52) along an ordinate axis ($Y_1$, $Y_2$) transversal to said horizontal axis ($X_1$, $X_2$), and in
- compressing the stretched longitudinal profile (52') along an axis ($X_1$, $X_2$) orthogonal to said ordinate axis ($Y_1$, $Y_2$).

**2.** The method as claimed in claim 1, wherein, said optical coordinate system also being identified by a normal axis ($Z_2$) perpendicular to the tangential plane of the ophthalmic lens (30) at the centering point (34), said ordinate axis ($Y_2$) is orthogonal to said horizontal ($X_2$) and normal ($Z_2$) axes.

**3.** The method as claimed in claim 1 or 2, wherein steps a) to e) are successively performed one after the other and wherein said curved surface is deduced from the curvature parameter of said ophthalmic lens (30).

**4.** The method as claimed in claim 1 or 2, wherein steps c) and d) are performed before step b) and wherein said curved surface is deduced from the curvature parameter of the surround of said spectacle frame (10, 20).

**5.** The method as claimed in one of claims 1 to 4, wherein, in step d), the two correction operations are performed successively and wherein, during the compression operation, the stretched longitudinal profile (52') is also compressed along the ordinate axis ($Y_1$, $Y_2$) so that the corrected longitudinal profile (53) remains more elongated than the projected longitudinal profile (52) along the ordinate axis ($Y_1$, $Y_2$).

**6.** The method as claimed in one of claims 1 to 5, wherein said mathematical function (f) is independent of the difference between said perimeter lengths ($l_1$, $l_3$).

7. The method as claimed in one of claims 1 to 6, wherein the mathematical function (f) is an expansion about the horizontal axis ($X_2$), of a ratio (k) known as the stretching coefficient.

8. The method as claimed in one of claims 1 to 7, wherein the mathematical function (f) has a predetermined stretching coefficient (k).

9. The method as claimed in one of claims 1 to 7, wherein the mathematical function (f) has a stretching coefficient (k) that is determined according to the shape of the ophthalmic lens (30) or the shape of the spectacle frame (10, 20) or the material of the spectacle frame (10, 20).

10. The method as claimed in one of claims 1 to 7, wherein the mathematical function (f) has a stretching coefficient (k) that is variable according to the position of the point concerned on the projected longitudinal profile (52).

11. The method as claimed in one of claims 9 and 10, wherein the stretching coefficient (k) is determined according to a curve characteristic of the surround (11, 21).

12. The method as claimed in claim 11, wherein, if said curve characteristic is below a determined threshold, the stretching coefficient (k) is equal to 1 at any point of the projected longitudinal profile (52) and said mathematical function (f) is the identity function, otherwise, the stretching coefficient (k) is strictly greater than 1 in at least a portion of the projected longitudinal profile (52).

13. The method as claimed in one of claims 1 to 12, wherein said curved surface is the front (31) or rear (32) face of the ophthalmic lens (30) or is situated between the front (31) and rear (32) faces of the ophthalmic lens (30).

14. The method as claimed in one of claims 1 to 13, wherein said projection is an orthogonal projection along an axis ($Z_2$) that is normal to the horizontal axis ($X_2$).

15. The method as claimed in one of claims 1 to 14, wherein, in step a), the spatial coordinates ($x_1$, $y_1$, $z_1$) of a plurality of points ($P_1$) characterizing the shape of said acquired longitudinal profile (50) are acquired, and the perimeter length ($l_1$) of said acquired longitudinal profile (50) is calculated on the basis of these spatial coordinates ($x_1$, $y_1$, $z_1$).

**Patentansprüche**

1. Verfahren zum Ausarbeiten einer Vorgabe für das Zuschneiden eines Brillenglases (30) in Hinblick auf seine Montage in eine Einfassung (11, 21) eines Brillengestells (10,20), das folgende Schritte umfasst:

a) Erfassen der Form eines Längsprofils (50) der Einfassung (11, 21) und der Umfangslänge ($l_1$) dieses erfassten Längsprofils (50) in einem durch eine waagrechte Achse ($X_1$) **gekennzeichneten** Bezugssystem der Einfassung (11, 21);
b) Zentrieren und Ausrichten des erfassten Längsprofils (50) in einem optischen Bezugssystem des Brillenglases (30), das durch einen Zentrierpunkt (34) und durch eine waagrechte Achse ($X_2$) **gekennzeichnet** ist und mit dem Bezugssystem der Einfassung in Übereinstimmung gebracht wird,
c) Projizieren des erfassten Längsprofils (50) auf eine gewölbte Oberfläche, die von einem Wölbungsparameter des Brillenglases (30) oder einem Wölbungsparameter des Brillengestells (10, 20) abgeleitet wird,
d) Korrigieren der Form des projizierten Längsprofils (52), sodass seine Umfangslänge ($l_3$) mit der Umfangslänge ($l_1$) des erfassten Längsprofils (50) abgeglichen wird,
e) Ableiten der Vorgabe für das Zuschneiden vom korrigierten Längsprofil (53),

**dadurch gekennzeichnet, dass** die Korrektur im Schritt d) in zwei Durchgängen vorgenommen wird, die bestehen aus:

- Strecken des projizierten Längsprofils (52) entlang einer zur waagrechten Achse ($X_1$, $X_2$) querliegenden Koordinatenachse ($Y_1$, $Y_2$) gemäß einer bestimmten mathematischen Funktion (*f*) und
- Komprimieren des gestreckten Längsprofils (52') entlang einer zur Koordinatenachse ($Y_1$, $Y_2$) orthogonalen Achse ($X_1$, $X_2$).

2. Verfahren nach Anspruch 1, bei dem die Koordinatenachse ($Y_2$) zur waagrechten Achse ($X_2$) und zur normalen

Achse ($Z_2$) orthogonal ist, wobei das optische Bezugssystem auch durch eine normale Achse ($Z_2$) **gekennzeichnet** ist, die zur Ebene, die das Brillenglas (30) im Zentrierpunkt (34) berührt, senkrecht steht.

3. Verfahren nach einem der Ansprüche 1 und 2, bei dem die Schritte a) bis e) nacheinander und einzeln durchgeführt werden und bei dem die gewölbte Oberfläche vom Wölbungsparameter des Brillenglases (30) abgeleitet wird.

4. Verfahren nach einem der Ansprüche 1 und 2, bei dem die Schritte c) und d) vor dem Schritt b) ausgeführt werden und bei dem die gewölbte Oberfläche vom Wölbungsparameter der Einfassung des Brillengestells (10, 20) abgeleitet wird.

5. Verfahren nach einem der Ansprüche 1 bis 4, bei dem die beiden Korrekturschritte im Schritt d) nacheinander ausgeführt werden und bei dem das gestreckte Längsprofil (52') beim Kompressionsvorgang auch entlang der Koordinatenachse ($Y_1$, $Y_2$) derart komprimiert wird, dass das korrigierte Längsprofil (53) stärker verlängert bleibt als das entlang der Koordinatenachse ($Y_1$, $Y_2$) projizierte Längsprofil (52).

6. Verfahren nach einem der Ansprüche 1 bis 5, bei dem die mathematische Funktion ($f$) vom Unterschied zwischen den Umfangslängen ($I_1$, $I_3$) unabhängig ist.

7. Verfahren nach einem der Ansprüche 1 bis 6, bei dem die mathematische Funktion ($f$) eine Dehnung um die waagrechte Achse ($X_2$) ist, deren Verhältnis als Streckungsfaktor bezeichnet wird.

8. Verfahren nach einem der Ansprüche 1 bis 7, bei dem die mathematische Funktion ($f$) einen vorbestimmten Streckungsfaktor (k) aufweist.

9. Verfahren nach einem der Ansprüche 1 bis 7, bei dem die mathematische Funktion ($f$) einen bestimmten Streckungsfaktor (k) aufweist, der von der Form des Brillenglases (30) und/oder der Form der Brillenfassung (10, 20) und/oder des Materials der Brillenfassung (10, 20) abhängt.

10. Verfahren nach einem der Ansprüche 1 bis 7, bei dem die mathematische Funktion ($f$) einen variablen Streckungsfaktor (k) aufweist, der von der Position des berücksichtigten Punktes auf dem projizierten Längsprofil (52) abhängt.

11. Verfahren nach einem der Ansprüche 9 und 10, bei dem der Streckungsfaktor (k) in Abhängigkeit eines Krümmungsmerkmals der Einfassung (11, 21) bestimmt wird.

12. Verfahren nach Anspruch 11, bei dem, wenn das Krümmungsmerkmal unter einem bestimmten Grenzwert liegt, der Streckungsfaktor (k) in jedem Punkt des projizierten Längsprofils (52) gleich 1 und die mathematische Funktion ($f$) die Identitätsfunktion ist, bzw. bei dem der Streckungsfaktor (k) ansonsten auf alle Fälle in mindestens einem Teil des projizierten Längsprofils (52) größer als 1 ist.

13. Verfahren nach einem der Ansprüche 1 bis 12, bei dem die gewölbte Oberfläche die Vorderseite (31) oder Rückseite (32) des Brillenglases (30) ist oder zwischen der Vorderseite (31) und Rückseite (32) des Brillenglases (30) liegt.

14. Verfahren nach einem der Ansprüche 1 bis 13, bei dem die Projektion eine orthogonale Projektion entlang einer zur waagrechten Achse ($X_2$) normalen Achse ($Z_2$) ist.

15. Verfahren nach einem der Ansprüche 1 bis 14, bei dem man im Schritt a) die Raumkoordinaten ($x_1$, $y_1$, $z_1$) einer Vielzahl von die Form des erfassten Längsprofils (50) charakterisierenden Punkten ($P_1$) erfasst und man ausgehend von diesen Raumkoordinaten ($x_1$, $y_1$, $z_1$) die Umfangslänge ($I_1$) des erfassten Längsprofils (50) berechnet.

Fig.1

Fig.2

Fig.3

EP 2 305 423 B1

Fig.4

19

Fig.5

Fig.6

Fig.7

Fig.8

Fig.9

# Fig.10

# Fig.11

**EP 2 305 423 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1642678 A

- EP 0750172 A